# EUROPÄISCHE PATENTSCHRIFT

(11) **EP 0 403 425 B1**
(45) Veröffentlichungstag und Bekanntmachung des Hinweises auf die Patenterteilung: **29.06.1994**
(21) Anmeldenummer: 90810397.1
(22) Anmeldetag: 30.05.1990
(51) Int. Cl.: B23D 25/04, B23D 21/14, B21C 37/12, B26D 5/32

(54) **Verfahren und Vorrichtung zum Trennen von Rohren in einzelne Rohrstücke,sowie Verwendung des Verfahrens**
Method and apparatus for cutting tubes
Méthode et dispositif pour couper des tubes

(30) Priorität: 13.06.1989 CH 2196/89
(43) Veröffentlichungstag der Anmeldung: 19.12.1990
(73) Patentinhaber: Emil Suter Maschinenfabrik AG, CH-5703 Seon (CH)
(72) Erfinder: Binggeli, Rudolf, CH-5616 Meisterschwanden (CH); Langmeier, Fritz, CH-5234 Villigen (CH)
(74) Vertreter: Frauenknecht, Alois J.

(56) Entgegenhaltungen:
- EP-A- 0 206 201
- CH-A- 375 316
- DE-C- 834 559
- US-A- 4 220 077

## Beschreibung

Die Erfindung bezieht sich auf ein Verfahren zum Trennen von Rohren während des Produktionsprozesses in einzelne Rohrstücke mittels einer zwei Schneidrollen aufweisenden Rollschere.

Im weiteren betrifft die Erfindung eine Schneidvorrichtung zum Trennen von Rohren während des Produktionsprozesses mittels einer zwei Schneidrollen aufweisenden Rollschere sowie eine bevorzugte Verwendung.

Bei der endlosen Fertigung von Rohren hat man die zu erzeugenden Rohrstücke bislang meist durch Sägen abgetrennt. Dies führt zu einem hohen Lärmpegel und zu Funkenwurf mit entsprechender Gefährdung der Umgebung. Bekannt ist es jedoch auch schon, die Rohrstücke mittels einer Rollschere abzutrennen. Die Rollen der bisher gebräuchlichen Rollscheren erfordern jedoch einen hohen Platzbedarf, so dass ein Trennen von Rohren kleinen Durchmessers nicht möglich ist, vgl. hierzu EP -A- 0 206 201.

Der Erfindung liegt die Aufgabe zugrunde, ein Verfahren der eingangs genannten Art zum Trennen von Rohren in einzelne Rohrstücke zu entwickeln, welches mit möglichst geringem Aufwand durchführbar ist und auch ein Trennen durchmesserkleinerer Rohre erlaubt. Im weiteren soll eine Schneidvorrichtung zum Trennen von Rohren während ihres Produktionsprozesses geschaffen werden.

Die erstgenannte Aufgabe wird erfindungsgemäss dadurch gelöst, dass zunächst in den Rohren oder im flächigen Ausgangsmaterial der Rohre jeweils eine Öffnung zum späteren Schneiden eines Rohrstücks mit einer Rollschere erzeugt wird, wobei die Öffnung zum Durchführen einer Schneidrolle bemessen ist, dass die Rollschere mit einer Schneidrolle in die Öffnung eingeführt wird, sodass durch Drehen des Rohres um seine Längsachse das Rohrstück abgetrennt wird.

Durch diese Verfahrensweise kann die in das Rohr einzuführende Schneidrolle der Rollschere beispielsweise durch eine einfache Schwenkbewegung der Rollschere durch die zuvor erzeugte Öffnung in das Rohr bewegt werden. Da anschliessend die das Rohrstück abtrennende Schneidkante durch Drehung des Rohres erzeugt wird, braucht sich die Rollschere nicht um das Rohr herum zu bewegen. Das erfindungsgemässe Verfahren ist deshalb sehr einfach auszuführen und erfordert keine einen grossen Platzbedarf aufweisende Rollschere. Es ist deshalb auch bei Rohren mit geringem Durchmesser einsetzbar.

Das Abtrennen der Rohrstücke kann ohne Unterbrechung des Produktionsvorganges der Rohre erfolgen, wenn gemäss einer vorteilhaften Weiterbildung des Verfahrens die Rohre während des Trennens ihre axiale Vorschubbewegung beibehalten und die Rollschere entsprechend in axialer Richtung mitgeführt wird.

Die Rollschere übt beim Trennvorgang kein Kippmoment auf das zu trennende Rohr aus, wenn eine richtig eingestellte Rollschere mit jeweils zwei Schneidkanten aufweisenden Schneidrollen verwendet wird.

Die Rollschere schwenkt bei entsprechender Kraftbeaufschlagung von selbst mit einer Schneidrolle in das zu trennende Rohr, wenn eine Rollschere mit Schneidrollen unterschiedlichen Durchmessers verwendet wird und die Öffnungen zum Durchführen lediglich nach der durchmesserkleineren Schneidrolle bemessen werden und wenn zum Einführen der Schneidrolle die Rollschere von aussen mit ihrer durchmesserkleineren Schneidrolle gegen das sich drehende Rohr gedrückt wird, so dass die Rollschere mit ihrer durchmesserkleineren Schneidrolle in das Rohr schwenkt, sobald die Öffnung mit der durchmesserkleineren Schneidrolle fluchtet.

Die Stanzeinheit zur Erzeugung der Öffnungen im Rohr kann besonders einfach ausgebildet werden, wenn gemäss einer anderen Weiterbildung des Verfahrens die Öffnungen vor dem Bördeln der Ränder des die Rohre bildenden Blechbandes und vor dem Wickeln in das Blechband gestanzt werden.

Die Rollschere braucht während des Schervorganges in Umfangsrichtung keine unerwünschte Vorschubbewegung auszuführen, wenn die Vorschubgeschwindigkeit der Rohre während des Trennvorganges herabgesetzt wird.

Für sehr dünnwandige Rohre ist es vorteilhaft, wenn das Einfahren der durchmesserkleineren Schneidrolle durch eine die Position der Öffnungen überwachende Fotozelle gestartet wird.

Die zweitgenannte Aufgabe, nämlich die Schaffung einer Schneidvorrichtung zum Trennen von Rohren wird erfindungsgemäss dadurch gelöst, dass eine dieser Schneidvorrichtung vorgeschaltete Vorrichtung zum Erzeugen von Öffnungen vorgesehen ist und dass die Rollschere eine durchmesserkleinere Schneidrolle zum Einführen durch eine Öffnung im zu trennenden Rohr und eine durchmessergrössere Schneidrolle zum Aufsetzen auf der Aussenmantelfläche des Rohres aufweist.

Eine solche Schneidvorrichtung ist sehr einfach aufgebaut und beansprucht relativ wenig Platz. Sie eignet sich deshalb auch zum Trennen von Rohren geringen Durchmessers. Ihr einfacher Aufbau ist in erster Linie dadurch bedingt, dass sie keine Vorschubbewegung um das zu trennende Rohr herum ausführen muss. Da sich die Schneidvorrichtung mit ihrer durchmessergrösseren Schneidrolle aussenseitig auf das zu trennende Rohr aufsetzt, hält das zu trennende Rohr die Rollschere zwangsläufig in der richtigen Position. Die erfindungsgemässe Rollschere erfordert deshalb keine aufwendigen Positionierungsmittel.

Besonders vorteilhaft ist es, wenn die Schneidrollen jeweils zwei Schneidkanten aufweisen.

Die Rollschere kann ohne Unterbrechung des Produktionsvorganges der Rohre, also während des Rohrvorschubs, arbeiten, wenn gemäss einer vorteilhaften Ausgestaltung der Vorrichtung die Rollschere auf einer parallel zu dem zu trennenden Rohr ausgerichteten Längsführung verschiebbar angeordet ist.

Das zu trennende Rohr wird während des Trennvorganges besonders gering auf Verwindung beansprucht, wenn zumindest eine Schneidrolle einen motorischen Antrieb hat.

Das Mitfahren der Rollschere mit dem erzeugten Rohr kann dadurch erfolgen, dass ein Vorschubmotor zum Verschieben der Rollschere auf ihrer Längsführung synchron mit der Rohrauslaufgeschwindigkeit vorgesehen ist.

Auf einen solchen Vorschubmotor kann jedoch verzichtet werden, so dass sich die Vorrichtung weiter vereinfacht, wenn in Weiterbildung der Erfindung die Rollschere in Vorschubrichtung der Rohre frei verschiebbar auf der Längsführung angeordnet ist und zur Zurückstellung der Rollschere nach jedem Trennvorgang ein Rückstellzylinder vorgesehen ist.

Das Verschwenken der Rollschere in Arbeitsposition bedingt besonders geringen Aufwand, wenn gemäss einer anderen, vorteilhaften Ausgestaltung der Erfindung die Rollschere schwenkbar auf der parallel zu dem zu trennenden Rohr ausgerichteten Längsführung angeordnet ist und zum Verschwenken in Arbeitsposition einen gegen einen Schwenkzylinder abgestützten Arm hat.

Die Erfindung lässt zahlreiche Ausführungsmöglichkeiten zu. Zur weiteren Verdeutlichung des erfindungsgemässen Verfahrens und einer erfindungsgemäss gestalteten Schneidvorrichtung wird nachfolgend auf die Zeichnung Bezug genommen. Diese zeigt in
- Fig. 1: eine schematische Draufsicht auf eine Rohrerzeugungsanlage mit einer Schneidvorrichtung zur Abtrennung von Rohrstücken,
- Fig. 2: einen gegenüber Fig. 1 im Massstab vergrösserten Querschnitt durch die Anlage im Bereich der Schneidvorrichtung entlang der Linie II- II in Fig. 1,
- Fig. 3: eine Draufsicht auf die Schneidvorrichtung und
- Fig. 4: einen horizontalen Schnitt durch das zu trennende Rohr mit zwei in Eingriff befindlichen Schneidrollen der Schneidvorrichtung.

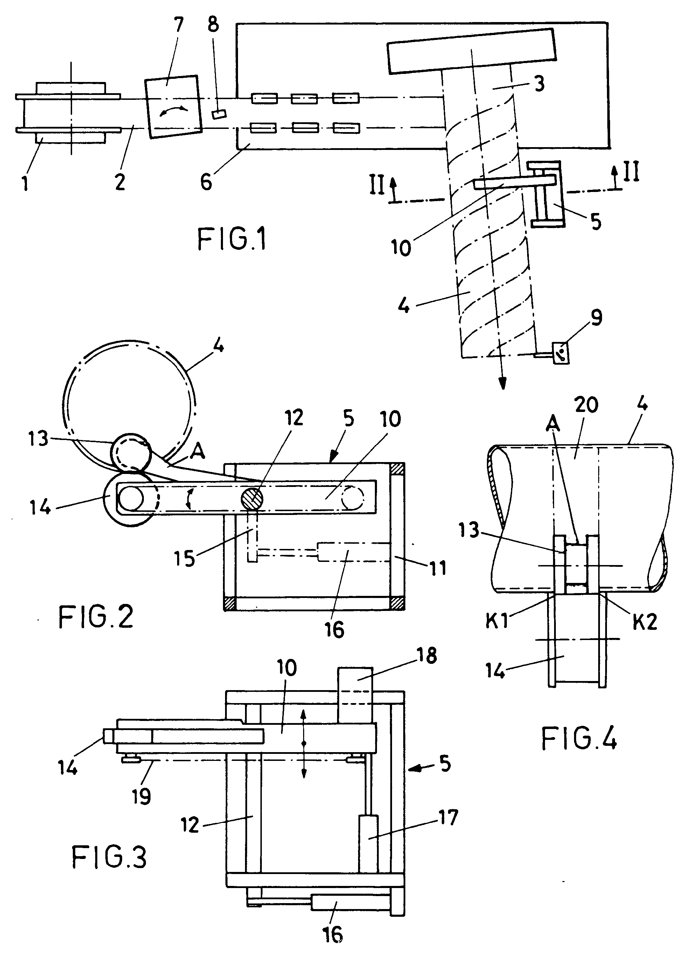

In Fig. 1 ist eine Rolle, eine sogenannte Coilhaspel 1 dargestellt, von der ein Band 2 einer Wickelschablone 3 zugeführt wird. Auf dieser Wickelschablone 3 wird ein als Wickelfalzrohr zu bezeichnendes, endloses Rohr 4 erzeugt, von dem mittels einer Schneidvorrichtung 5 Rohrstücke abgetrennt werden. Der Wickelschablone 3 vorgeschaltet ist ein üblicher Bördler 6, mit dem die Kanten des Bandes 2 geformt werden. Zwischen dem Bördler 6 und der Coilhaspel 1 befindet sich eine Stanzeinheit 7, mit der in einem festgelegten Abstand Öffnungen 8 in das noch nicht gewickelte Band 2 gestanzt werden. Die Stanzeinheit 7 muss natürlich etwas schräg zum Band 2 angeordnet sein, da das Band schraubenförmig auf die Wickelschablone 3 gewickelt wird. Zur Steuerung der Schneidvorrichtung dient ein Endschalter 9, der den Schneidvorgang auslöst, wenn das Rohr 4 gegen ihn ausläuft. Gleichzeitig wird bei Betätigung dieses Endschalters 9 die Produktionsgeschwindigkeit von beispielsweise 80 m/min auf beispielsweise 12 bis 15 m/min herabgesetzt.

Die Fig. 2 verdeutlicht die Gestaltung der Schneidvorrichtung 5. Diese weist eine Rollschere 10 auf, die in einem Gestell 11 auf einer Längsführung 12 schwenkbar und verschiebbar angeordnet ist. Die Rollschere 10 hat zwei Schneidrollen 13, 14 unterschiedlichen Durchmessers. Die durchmesserkleinere Schneidrolle 13 ist so bemessen und gestaltet, dass sie durch die in Fig. 1 gezeigte Öffnung 8 in das Rohr 4, mitsamt ihrem Trägerarm A, hinein gelangen und danach durch Drehen des Rohres 4 der Schneidvorgang erfolgen kann.

An der Rollschere 10 ist ein in Fig. 2 gesehen nach unten weisender Arm 15 fest angebracht, der sich gegen einen Schwenkzylinder 16 abstützt. Wird dieser Schwenkzylinder 16 mit einem pneumatischen Druck beaufschlagt, dann hat die Rollschere 10 die Tendenz, sich im Uhrzeigersinn zu verschwenken. Zur Einleitung des Schneidvorganges wird die Rollschere mit ihrer Schneidrolle 13 auf die Aussenmantelfläche des Rohres 4 aufgesetzt und der Schwenkzylinder 16 beaufschlagt. Gelangt durch die Drehung und den Vorschub des Rohres 4 die Schneidrolle 13 in Überdeckung mit der Öffnung 8 im Rohr 4, dann schwenkt die Rollschere 10 zwangsläufig mit der Schneidrolle 13 in das Rohr 4 hinein, bis dass sich die Schneidrolle 14 aussen auf das Rohr 4 aufsetzt und der Schneidvorgang beginnen kann.

Die Fig. 3 lässt in der Draufsicht erkennen, wie die Rollschere 10 auf ihrer Längsführung 12 verschiebbar angeordnet ist. Während des Trennvorganges bewegt sich die Rollschere 10 aus der gezeigten Ausgangsstellung zur gegenüberliegenden Seite der Schneidvorrichtung 5. Dann wird sie durch Betätigung des Schwenkzylinders 16 aus dem Rohr 4 geschwenkt. Anschliessend kann man mittels eines Rückstellzylinders 17 die Rollschere 10 zurück in die Ausgangslage verschieben. Die gezeigte Ausführungsform benötigt somit keinen Vorschubantrieb für die Rollschere 10. Gezeigt ist in Fig. 3 jedoch ein Antrieb 18, mit dem über eine Kette 19 die Schneidrolle 14 antreibbar ist.

Die Fig. 4 lässt erkennen, dass die Schneidrollen 13, 14 zwei Schneidkanten K1 und K2 haben. Dadurch wird durch den Schneidvorgang aus dem Rohr 4 ein Blechstreifen 20 herausgetrennt.

Der Erfindungsgegenstand hat sich insbesondere in der Fertigung von verzinkten, spiralgewickelten Rohren für den Lüftungs- und Klimabereich bewährt.

Praktische Versuche ergaben, dass verzinkte, spiralgewickelte Lüftungsrohre mit Blechdicken von 0,2 mm bis 1,25 mm mit dem erfindungsgemässen Verfahren und der Vorrichtung in Durchmessern von 60 mm bis 2200 mm problemlos ablängbar sind.

Selbstverständlich können auch nicht plattierte Rohre und/oder solche aus nichtrostendem Stahl oder aus anderen Materialien wie Aluminiumlegierungen etc. geschnitten werden.

Der Erfindungsgegenstand lässt sich durch eine Steuerung mit einem einfachen Prozessrechner koppeln, damit die im Ausgangsmaterial anzubringenden Öffnungen in Abhängigkeit der gewünschten Länge, des Rohrdurchmessers und der Steigung des Rohres optimal positioniert wird.

Das Verfahren und die Vorrichtung lassen sich leicht in eine automatisierte Fertigung (CIM) integrieren und entsprechend den Fabrikationsbedürfnissen anpassen.

## Patentansprüche

1. Verfahren zum Trennen von Rohren in einzelne Rohrstücke während des Produktionsprozesses mittels einer zwei Schneidrollen aufweisenden Rollschere, dadurch gekennzeichnet, dass zunächst in den Rohren oder im flächigen Ausgangsmaterial der Rohre jeweils eine Öffnung zum späteren Schneiden eines Rohrstücks mit einer Rollschere erzeugt wird, wobei die Öffnung zum Durchführen einer Schneidrolle bemessen ist, dass die Rollschere mit einer Schneidrolle in die Öffnung eingeführt wird, sodass durch Drehen des Rohres um seine Längsachse das Rohrstück abgetrennt wird.

2. Verfahren nach Anspruch 1, dadurch gekennzeichnet, dass die Schneidrolle der Rollschere von aussen zugeführt werden und dass die ausserhalb des Rohres liegende Schneidrolle motorisch angetrieben ist.

3. Verfahren nach Anspruch 2, dadurch gekennzeichnet, dass die Rohre während des Trennens ihre axiale Vorschubbewegung beibehalten und die Rollschere entsprechend in axialer Richtung mitgeführt wird.

4. Verfahren nach den Ansprüchen 2 oder 3, dadurch gekennzeichnet, dass eine Rollschere mit jeweils zwei Schneidkanten aufweisenden Schneidrollen eingesetzt wird.

5. Verfahren nach einem der Ansprüche 1 bis 4, dadurch gekennzeichnet, dass eine Rollschere mit Schneidrollen unterschiedlichen Durchmessers verwendet wird und die Öffnungen zum Durchführen nach der durchmesserkleineren Schneidrolle bemessen werden und dass zum Einführen der Schneidrolle die Rollschere von aussen mit ihrer durchmesserkleineren Schneidrolle gegen das sich drehende Rohr gedrückt wird, so dass die Rollschere mit ihrer durchmesserkleineren Schneidrolle in das Rohr schwenkt, sobald die Öffnung mit der durchmesserkleineren Schneidrolle fluchtet.

6. Verfahren nach einem der Ansprüche 1 bis 4, dadurch gekennzeichnet, dass die Position der im Rohrstück vorgesehenen Öffnungen durch wenigstens einen Sensor abgetastet wird.

7. Verfahren nach Anspruch 1 bis 5, bei dem es sich bei den Rohren um Wickelfalzrohre handelt, dadurch gekennzeichnet, dass die Öffnungen vor dem Bördeln der Ränder des die Rohre bildenden Blechbandes und vor dem Wickeln in das Blechband gestanzt werden.

8. Verfahren nach den Ansprüchen 1 bis 5, dadurch gekennzeichnet, dass die Vorschubgeschwindigkeit der Rohre während des Trennvorganges herabgesetzt wird.

9. Verfahren nach den Ansprüchen 1 bis 6, dadurch gekennzeichnet, dass das Einfahren der durchmesserkleineren Schneidrolle durch eine die Position der Öffnung überwachende Fotozelle gestartet wird.

10. Schneidvorrichtung zum Trennen von Rohren in einzelne Rohrstücke während des Produktionsprozesses mittels einer zwei Schneidrollen aufweisenden Rollschere, dadurch gekennzeichnet, dass eine dieser vorgeschaltete Vorrichtung zum Erzeugen von Öffnungen vorgesehen ist und, dass die Rollschere (10) eine durchmesser-kleinere Schneidrolle (13) zum Einführen durch eine Öffnung (8) im zu trennenden Rohr (4) und eine durchmessergrössere Schneidrolle (14) zum Aufsetzen auf der Aussenmantelfläche des Rohres (4) aufweist.

11. Schneidvorrichtung nach Anspruch 10, dadurch gekennzeichnet, dass die Schneidrollen (13, 14) jeweils zwei Schneidkanten (K1, K2) aufweisen.

12. Schneidvorrichtung nach den Ansprüchen 10 und 11, dadurch gekennzeichnet, dass die Rollschere (10) auf einer parallel zu dem zu trennenden Rohr (4) ausgerichteten Längsführung (12) verschiebbar angeordnet ist.

13. Schneidvorrichtung nach den Ansprüchen 10 bis 12, dadurch gekennzeichnet, dass ein Vorschubmotor zum Verschieben der Rollschere (10) auf ihrer Längsführung (12) synchron mit der Rohrauslaufgeschwindigkeit vorgesehen ist.

14. Schneidvorrichtung nach den Ansprüchen 10 bis 13, dadurch gekennzeichnet, dass die Rollschere (10) in Vorschubrichtung der Rohre (4) frei verschiebbar auf der Längsführung (12) angeordnet ist und zur Zurückstellung der Rollschere (10) nach jedem Trennvorgang ein Rückstellzylinder (17) vorgesehen ist.

15. Schneidvorrichtung nach den Ansprüchen 10 bis 14, dadurch gekennzeichnet, dass die Rollschere (10) schwenkbar auf der parallel zu dem zu trennenden Rohr (4) ausgerichteten Längsführung (12) angeordnet ist und zum Verschwenken in Arbeitsposition einen gegen einen Schwenkzylinder (16) abgestützten Arm (15) hat.

16. Verwendung des Verfahrens nach Anspruch 2 zum Trennen von spiralgewickelten, dünnwandigen Blechrohren.

## Claims

1. A method of cutting tubes into individual tube sections during the production process by means of a roller cutter comprising two cutting rolls, **characterized in that** a respective opening for subsequently cutting a tube member using a roller cutter is first produced in the tubes or in the flat starting material of the tubes, wherein the opening is dimensioned for the passage of a cutting roll, [and] the roller cutter is inserted with a cutting roll into the opening, so that the tube member is cut off by rotating the tube about the longitudinal axis thereof.

2. A method according to Claim 1, **characterized in that** the cutting roll of the roller cutter [is] supplied from outside, and the cutting roll situated outside the tube is driven by a motor.

3. A method according to Claim 2, **characterized in that** during the cutting the tubes maintain their axial advancing movement and the roller cutter is jointly guided accordingly in the axial direction.

4. A method according to Claim 2 or 3, **characterized in that** a roller cutter with cutting rolls having two respective cutting edges is used.

5. A method according to one of Claims 1 to 4, **characterized in that** a roller cutter with cutting rolls of different diameter is used and the openings for the passage through are dimensioned in accordance with the cutting roll of smaller diameter, and in order to introduce the cutting roll the roller cutter is pressed from the outside by its cutting roll of smaller diameter against the rotating tube, so that the roller cutter pivots into the tube with its cutting roll of smaller diameter as soon as the opening is in alignment with the cutting roll of smaller diameter.

6. A method according to one of Claims 1 to 4, **characterized in that** the position of the openings provided in the tube member is sensed by at least one sensor.

7. A method according to Claims 1 to 5, in which the tubes are folded spiral-seam tubes, **characterized in that** the openings are stamped into the sheet strip before folding over the edges of the sheet strip forming the tubes and before winding.

8. A method according to Claims 1 to 5, **characterized in that** the advancing speed of the tubes is reduced during the cutting procedure.

9. A method according to Claims 1 to 6, **characterized in that** the introduction of the cutting roll of smaller diameter is initiated by a photo-electric cell monitoring the position of the opening.

10. A cutting device for cutting tubes into individual tube sections during the production process by means of a roller cutter comprising two cutting rolls, **characterized in that** a device arranged upstream thereof is provided for forming openings, and the roller cutter (10) comprises a cutting roll (13) of smaller diameter for insertion through an opening (8) in the tube (4) to be cut and a cutting roll (14) of greater diameter for placing on the external surface of the tube (4).

11. A cutting device according to Claim 10, **characterized in that** the cutting rolls (13, 14) each have two cutting edges (K1, K2).

12. A cutting device according to Claims 10 to 11, **characterized in that** the roller cutter (10) is arranged so as to be displaceable on a longitudinal guide (12) orientated parallel to the tube (4) to be cut.

13. A cutting device according to Claims 10 to 12, **characterized in that** an advancing motor for displacing the roller cutter (10) on the longitudinal guide (12) thereof is provided so as to be synchronous with the delivery speed of the tube.

14. A cutting device according to Claims 10 to 13, **characterized in that** the roller cutter (10) is arranged on the longitudinal guide (12) so as to be freely displaceable in the direction of advance of the tubes (4) and a restoring cylinder (17) is provided for returning the roller cutter (10) after each cutting procedure.

15. A cutting device according to Claims 10 to 14, **characterized in that** the roller cutter (10) is arranged so as to be pivotable on the longitudinal guide (12) orientated parallel to the tube (4) to be cut and has an arm (15) supported against a pivoting cylinder (16) for pivoting into the operating position.

16. Use of the process according to Claim 2 for cutting spiral-wound, thin-walled sheet tubes.

## Revendications

1. Procédé pour couper des tubes pendant le processus de production en tronçons de tubes individuels au moyen d'une cisaille à roulettes équipée de deux roulettes de coupe, **caractérisé en ce** que dans les tubes ou dans le matériau de départ plat des tubes est réalisée à chaque fois une ouverture pour la coupe ultérieure d'un tronçon de tube au moyen d'une cisaille à roulettes, l'ouverture étant dimensionnée pour le passage d'une roulette de coupe, de sorte que la cisaille à roulettes est engagée avec une roulette de coupe dans l'ouverture de façon à sectionner un tronçon de tube par rotation du tube autour de son axe longitudinal.

2. Procédé selon la revendication 1, caractérisé en ce que les roulettes de coupe de la cisaille à roulettes sont amenées par l'extérieur et que la roulette de coupe située à l'extérieur du tube est motorisée.

3. Procédé selon la revendication 2, caractérisé en ce que, pendant le tronçonnement, les tubes conservent leur mouvement d'avancement axial et que la cisaille à roulettes est entraînée en conséquence dans le sens axial.

4. Procédé selon l'une des revendications 2 ou 3, caractérisé en ce qu'il met en oeuvre une cisaille à roulettes équipée de roulettes de coupe pourvues chacune de deux arêtes coupantes.

5. Procédé selon l'une des revendications 1 à 4, caractérisé en ce qu'il met en oeuvre une cisaille à roulettes avec des roulettes de coupe de différents diamètres, que les ouvertures pour le passage sont dimensionnées en fonction de la roulette de coupe présentant le diamètre plus petit, et que pour l'engagement de la roulette de coupe par l'extérieur, la cisaille à roulettes est appliquée avec sa roulette de coupe à diamètre plus faible contre le tube en rotation de manière que la cisaille à roulettes pivote avec sa roulette de coupe à diamètre plus faible dans le tube dès que l'ouverture est alignée avec ladite roulette de coupe à diamètre plus faible.

6. Procédé selon l'une des revendications 1 à 4, caractérisé en ce que la position des ouvertures prévues dans le tube est explorée par au moins un détecteur.

7. Procédé selon l'une des revendications 1 à 5, pour lequel les tubes sont des tuyaux métalliques agrafés, caractérisé en ce que les ouvertures sont découpées dans la bande de tôle avant le sertissage des bords de la bande de tôle formant les tubes et avant l'enroulement.

8. Procédé selon l'une des revendications 1 à 5, caractérisé en ce que la vitesse d'avancement des tubes est diminuée pendant le processus de tronçonnement.

9. Procédé selon l'une des revendications 1 à 6, caractérisé en ce que l'engagement de la roulette de coupe à diamètre plus faible est déclenché par une cellule photo-électrique qui surveille la position de l'ouverture.

10. Dispositif de coupe pour sectionner des tubes pendant le processus de production en tronçons de tubes individuels au moyen d'une cisaille à roulettes équipée de deux roulettes de coupe, caractérisé en ce qu'il comprend, en amont de celle-ci, un dispositif pour la réalisation des ouvertures et que la cisaille à roulettes (10) comprend une roulette de coupe (13) d'un diamètre plus petit pour l'introduction dans le tube (4) à tronçonner au travers d'une ouverture (8) et une roulette de coupe (14) d'un diamètre plus grand pour l'application contre la surface latérale extérieure du tube (4).

11. Dispositif de coupe selon la revendication 10, caractérisé en ce que les roulettes de coupe (13, 14) présentent chacune deux arêtes coupantes (K1, K2).

12. Dispositif de coupe selon l'une des revendications 10 et 11, caractérisé en ce que la cisaille à roulettes (10) est montée de manière mobile sur un guidage longitudinal (12) orienté parallèlement au tube (4) à tronçonner.

13. Dispositif de coupe selon l'une des revendications 10 à 12, caractérisé en ce qu'il est prévu un moteur d'avancement pour le déplacement de la cisaille à roulettes (10) sur son guidage longitudinal (12) en synchronisme avec la vitesse de sortie du tube.

14. Dispositif de coupe selon l'une des revendications 10 à 13, caractérisé en ce que la cisaille à roulettes (10) est montée sur le guidage longitudinal (12) de façon à pouvoir être déplacée librement dans la direction d'avancement des tubes (4), et qu'un cylindre de rappel (17) est prévu pour ramener la cisaille à roulettes (10) après chaque opération de tronçonnement.

15. Dispositif de coupe selon l'une des revendications 10 à 14, caractérisé en ce que la cisaille à roulettes (10) est montée de manière pivotante sur le guidage longitudinal (12) orienté parallèlement au tube (4) à tronçonner et qu'elle comporte un bras (15) articulé sur un cylindre de pivotement (16) pour le pivotement dans la position de travail.

16. Mise en oeuvre du procédé selon la revendication 2 pour le tronçonnement de tubes spiralés en tôle à faible épaisseur de paroi.
